# EUROPEAN PATENT APPLICATION

(11) **EP 4 282 840 A1**
(43) Date of publication of application: **29.11.2023**
(21) Application number: 22869433.7
(22) Date of filing: 16.09.2022
(51) Int. Cl.: C03C 10/04, C03C 10/12, C03C 10/14, C03C 10/02, C03C 21/00, C03B 32/02

(54) **LOW WARPING TEMPERED MICROCRYSTALLINE GLASS, PREPARATION METHOD THEREFOR AND APPLICATION THEREOF**

(30) Priority: 18.09.2021 CN 202111110119
(71) Applicant: Chongqing Aureavia Hi-tech Glass Co., Ltd, Chongqing 400714 (CN)
(72) Inventor: TAN, Baoquan, Chongqing 400714 (CN); HU, Wei, Chongqing 400714 (CN); ZHANG, Yanqi, Chongqing 400714 (CN); JIANG, Hong, Chongqing 400714 (CN)
(74) Representative: Comoglio, Elena
(86) International application number: PCT/CN2022/119442
(87) International publication number: WO 2023/041067

(57) **Abstract**

A low warping tempered microcrystalline glass, a preparation method therefor and application thereof. The microcrystalline glass has a compressive stress layer extending from a surface to an interior of the glass, a compressive stress at the surface of the glass being CS<550 MPa, and the compressive stress layer having the following stress distribution: (a) when a depth of the stress layer is 0 µm ≤ Dol < 30 µm, a stress distribution curve is approximately linear, and an absolute value of a slope k1 of the stress curve between any two points that are 20 µm apart on the curve satisfies 2.45 < |k1| < 5.05; (b) when the depth of the stress layer is 30 µm ≤ Dol ≤ Dol_zero, the stress distribution curve is approximately linear, and an absolute value of a slope k2 of the stress curve between any two points that are 20 µm apart on the curve satisfies 1 ≤ |k2| ≤ 1.5. By means of using the stress distribution of the described structure, a warping problem of the present tempered microcrystalline glass caused by a large stress gradient after tempering may be significantly improved.

## Description

### CROSS-REFERENCE TO RELEVANT APPLICATIONS

The present disclosure claims the priority of the Chinese patent application filed with the China National Intellectual Property Administration on September 18^{th}, 2021 with the application No. CN202111110119.0, entitled "LOW WARPING TEMPERED MICROCRYSTALLINE GLASS, PREPARATION METHOD THEREFOR AND APPLICATION THEREOF", which is incorporated herein in its entirety by reference.

### TECHNICAL FIELD

The present disclosure relates to the field of microcrystalline glass, and more particularly, to a low-warpage strengthened microcrystalline glass, a preparation method therefor, and an application thereof.

### BACKGROUND ART

With the rapid development of the smart industry, especially when the 5G era comes, glass materials have played an increasingly important role in the field of portable mobile electronic devices. Since the wavelengths of electromagnetic waves used in 5G and even subsequent 6G communications are getting shorter and shorter, the requirements for materials used in communication equipment are therefore getting higher and higher, and the scope of glass used in communication equipment is also becoming wider and wider. Taking mobile phones as an example, it only takes less than 5 years to develop mobile phones from the early application of the front cover to the current dual application of the front and rear covers. It is foreseeable that within the next five years in the future, mobile phones with all-glass shells will likely appear.

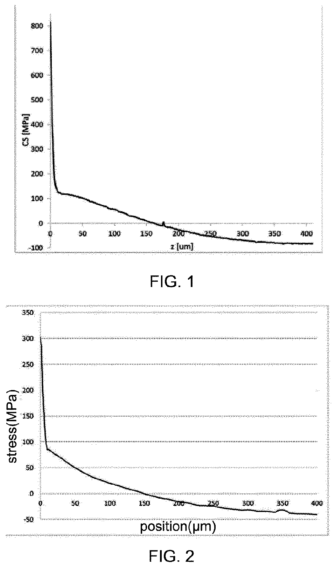

Since the original property of glass is a brittle material with poor ductility, therefore, as a structural material of mobile phone, the requirement of dimensional accuracy is particularly high. After the glass itself is processed by a two-step treatment of 3D hot bending and chemical strengthening, there will be a significant scaling and warping phenomenon of dimension. At present, the mainstream NAS Glass and LAS Glass in the field of electronic glass use the method of high compressive stress (CS) on the surface and large Depth of layer (Dol) inside to improve the impact resistance of the strengthened glass. The stress distribution is generally composed of the following:
(1) A thinner K stress layer in the outermost layer is generated by K⁺/Na⁺ exchange, and the distribution interval is a region between Dol_K = 0-15 µm, CS_K=850-900MPa; from the outer surface along the thickness direction, from the interval of Dol_15 µm - Dol_zero, the maximum compressive stress value CS_Na max is generally between 350MPa-550MPa, and it changes suddenly at the inflection point, as shown in FIG 1. From the distribution of the stress curve, it may be seen that the CS of the surface layer of the strengthened glass is more than 2 times higher than that of the inner layer of the strengthened glass;
(2) The slope |k| of the compressive stress curve due to Na+/K+ ion exchange is very large, indicating that within the depth range of this layer, the stress difference within a distance per unit thickness is very large. Moreover, when a large amount of glass is chemically strengthened in the same tempering furnace, the convection velocity of the molten liquid is different at different positions, especially on the outer side of the basket and the center of the basket, the difference is particularly obvious due to the barrier of a large number of glass pieces. Therefore, there will be a difference of about 0-50MPa in the CS of the Na⁺/K⁺ exchange layers on the two opposite surfaces of the same piece of glass. This stress difference will cause the glass to warp and deform to achieve mechanical balance. When the glass is a 2.5D unequal surface or a 3D curved surface, the deformation will further increase, and it directly affects the stability of the product dimensions. Taking 2.5D glass as an example, the current amount of warpage after strengthening in CG factories is generally between 150µm and 600µm, and some of them even reach 1200 µm, which is far from meeting the requirement of less than 200 µm required by the industry.

A prior art discloses a microcrystalline glass product with improved stress distribution, which emphasizes that on the stress distribution, there is an inflection point at a certain depth, and the slope |k| of the compressive stress curve is very large from the surface of the glass to the depth of the inflection point, as shown in FIG 2, the difference between the compressive stress formed by K⁺/Na⁺ exchange on the surface and the compressive stress formed by Na+/Li+ exchange inside is also relatively large, therefore, the product is also prone to warping and deformation after chemical strengthening.

### SUMMARY

The present disclosure provides a low-warping strengthened (tempered) microcrystalline glass, and the microcrystalline glass is provided with a compressive stress layer extending from a surface to an interior of the glass, wherein a compressive stress on the surface of the glass is represented as CS < 550 MPa, and the compressive stress has the following stress distributions:
(a) when a depth of the stress layer is represented as 0 µm ≤ Dol < 30 µm, a stress distribution curve is approximately a linear distribution, and an absolute value k1 of a slope of the stress curve between any two points separated by 20 µm on the curve is represented 2.45 < |k1| < 5.05; and
(b) when the depth of the stress layer is represented as 30 µm ≤ Dol ≤ Dol_zero, the stress distribution curve is approximately in a linear distribution, and an absolute value k2 of a slop of the stress curve between any two points separated by 20 µm on the curve is represented as 1 ≤ |k2| ≤ 1.5.

Optionally, the compressive stress on the surface of the glass is represented as CS < 350 MPa.

Optionally, k1 is represented as 2.45 < |k1| < 4.35.

Optionally, k1 is represented as 2.60 < |k1| < 3.75.

Optionally, k2 is represented as 1.00 < |k2| < 1.35.

Optionally, a depth of the compressive stress layer Dol_zero is represented as 110 µm - 142 µm; and when the layer depth is 50 µm, the stress CS_50 is 60 MPa - 130 MPa.

Optionally, a composition (wt%) of the microcrystalline glass is: SiO₂ 58.1%-78.8%, Al₂O₃ 5.4%-24.1%, MgO+ZnO 0-15%, B₂O₃ 0-3.3%, P₂O₅ 0-1.9%, ZrO₂ 0-3.5%, Li₂O 1.6%-13.7%, Na₂O 1.6%-4.5%, K₂O ≤3.1%, Y₂O₃ ≤8%, and residuals are unavoidable impurities, wherein Na₂O/R₂O ≤ 0.6, R₂O/Al₂O₃ ≤ 5.25, and R₂O is an alkali metal oxide.

Optionally, a crystal phase of the microcrystalline glass comprises one or more of lithium disilicate, lithium petalite, β-quartz solid solution, and spinel, wherein crystallinity is 70% to 98%.

Optionally, the crystallinity of the microcrystalline glass is 80% to 95%.

Optionally, the crystallinity of the microcrystalline glass is 87% to 95%.

Optionally, amount of warpage of the strengthened microcrystalline glass does not exceed 180 µm.

Optionally, the amount of warpage of the strengthened microcrystalline glass does not exceed 150 µm.

Optionally, the amount of warpage of the strengthened microcrystalline glass does not exceed 120 µm.

The present disclosure provides a preparation method for the strengthened microcrystalline glass as mentioned above, comprising steps of:
step 1: performing a crystallization treatment on a base glass, so as to obtain a basic microcrystalline glass; and
step 2: performing an ion exchange to the basic microcrystalline glass that has undergone the crystallization treatment.

Optionally, the ion exchange in step 2 comprises a two-time ion exchanges, wherein:
a first-time ion exchange includes: immersing the basic microcrystalline glass into a first molten salt bath to perform the first-time ion exchange, wherein the first molten salt bath comprises at least 75 wt% of NaNO₃, a temperature of the first-time ion exchange is 430 to 450 Celsius degrees, and time duration is 6 to 11 hours; and
a second-time ion exchange includes: immersing the basic microcrystalline glass that has undergone the first-time ion exchange into a second molten salt bath to perform the second-time ion exchange, wherein the second molten salt bath at least comprises two molten salts of KNO₃ and LiNO₃, a temperature of the second-time ion exchange is 420 to 440 Celsius degrees, and time duration is less than or equal to 60 minutes.

Optionally, a content of KNO₃ in the second molten salt bath is greater than or equal to 90wt%, and a content of LiNO₃ is represented as: 0<LiNO3≤0.15wt%.

Optionally, the crystallization treatment in step 1 comprises the steps of: putting the base glass into a box-type crystallization furnace to perform a three-stage thermal treatment, wherein a first step is to raise the temperature to 520 to 580 Celsius degrees and keep the temperature for 200 to 300 minutes, a second step is to raise the temperature to 600 to 640 Celsius degrees and keep the temperature for 100 to 150 minutes, and a third step is to raise the temperature to 645 to 740 Celsius degrees and keep the temperature for 180 to 270 minutes; and then cooling down the base glass to obtain the basic microcrystalline glass.

The present disclosure further provides an application of the strengthened microcrystalline glass as mentioned above, wherein the strengthened microcrystalline glass is used as a cover plate for a mobile phone, a cover plate for a tablet computer, a cover plate for a watch, and a cover plate for a car display.

### BRIEF DESCRIPTION OF DRAWINGS

In order to describe the technical solutions in the embodiments of the present disclosure more clearly, the accompanying drawings required for describing the embodiments of the present disclosure are briefly introduced in the following. It should be understood that the following drawings illustrate only certain embodiments of the present disclosure and are therefore not to be considered limiting of the scope. For a person of ordinary skill in the art, other related drawings may also be obtained according to these drawings without creative efforts.
FIG 1 illustrates a curve diagram of a mainstream stress distribution in the prior art;
FIG 2 illustrates a curve diagram of a stress distribution in a prior art;
FIG 3 illustrates a curve diagram of a stress of a microcrystalline glass prepared in embodiment 1;
FIG 4 illustrates an XRD spectrum of the microcrystalline glass prepared in embodiment 1;
FIG 5 illustrates an XRD spectrum of the microcrystalline glass prepared in embodiment 7;
FIG 6 illustrates a curve diagram of a stress of a microcrystalline glass prepared in embodiment 15; and
FIG 7 illustrates an XRD spectrum of a microcrystalline glass in comparative example 1.

### DETAILED DESCRIPTION OF EMBODIMENTS

In order to make the purpose, technical solutions, and advantages of the embodiments of the present disclosure clearer, the technical solutions in the embodiments of the present disclosure will be clearly and completely described below. The elements that are not indicated by the specific conditions in the embodiments will be carried out according to the conventional conditions or the conditions suggested by the manufacturer. The reagents or instruments used that are not indicated by the manufacturer, are all conventional products that could be purchased from the market.

The present disclosure is for solving the warping problem that is easy to occur in the strengthening process, and the mode of solving deformation on the market at present all belongs to the mode of "pollution first, treatment later", for example, for repairing deformation by a single-sided polishing, although the deformation may be repaired to a certain extent, but part of the strength brought by strengthening is sacrificed by polishing. The present disclosure fundamentally solves, from the perspectives of the internal structure and composition of the glass, the problem of easy deformation after strengthening.

In order to overcome the shortcomings of the prior art as mentioned above, the purpose of the present disclosure is to provide a low-warping strengthened microcrystalline glass, a preparation method therefore, and an application thereof. The CS on the surface of the prepared microcrystalline glass is low, and the compressive stress gradient difference is, extending from the surface to the interior of the glass, small and relatively uniform, which may significantly improve the warping problem caused by excessive compressive stress gradient difference after strengthening. Meanwhile, because the CT integral of the present disclosure is not weaker than that of the ordinary strengthened glass, plus the strength gain effect brought by the crystal, the overall drop resistance strength is even better than that of the ordinary strengthened glass.

The low-warping strengthened microcrystalline glass of the embodiments of the present disclosure, the preparation method therefore, and the application thereof are described below.

Some of the embodiments of the present disclosure provide a low-warping strengthened microcrystalline glass, wherein the amount of warpage of the low-warping strengthened microcrystalline glass does not exceed 180 µm, optionally, the warping volume does not exceed 150 µm, and optionally, the warping volume does not exceed 120 µm. In some embodiments, the microcrystalline glass is provided with a compressive stress layer extending from a surface to an interior of the glass, and a compressive stress on the surface of the glass is represented as CS < 550 MPa. Optionally, the compressive stress CS may be 100 MPa-540 MPa, 130 MPa-500 MPa, 150 MPa-400 MPa, or 200 MPa-300 MPa, such as 500 MPa, 450 MPa, 400MPa, 350 MPa, 320 MPa, 300 MPa, 280 MPa, 250 MPa, 180 MPa or 140 MPa, etc., or any value or range of values therebetween. Optionally, the compression stress on the surface of the glass is represented as CS <350 MPa. Optionally, CS <200 MPa. The compressive stress layer has the following stress distribution:
(a) when a depth of the stress player is represented as 0 µm ≤ Dol < 30 µm, a stress distribution curve is approximately in a linear distribution, and an absolute value k1 of a slope of the stress curve between any two points separated by 20 µm on the curve is represented as 2.45 < |k1| < 5.05, or any value or range of values therebetween. Optionally, k1 is represented as: 2.45< |k1| <4.35; optionally, k1 is represented as 2.60< |k1| 3.75; optionally, k1 is represented as 2.60< |k1| <3.2; and
(b) when the depth of the stress layer is represented as 30 µm ≤ Dol ≤ Dol_zero, the stress distribution curve is approximately a linear distribution, and an absolute value k2 of a slop of the stress curve between any two points separated by 20 µm on the curve is represented as 1 ≤ |k2| ≤ 1.5. Optionally, k2 is represented as 1.00 < |k2|< 1.35; and optionally, k2 is represented as 1.00 < |k2|< 1.33.

In some embodiments, the depth of the compressive stress layer Dol_zero is 110 µm-142 µm. Optionally, Dol_zero may be 115 µm-140 µm, 120 µm-135 µm or 125 µm-130 µm, such as 120 µm, 125 µm, 128 µm, 130 µm, 135 µm, 138 µm or 140 µm, etc., or any value or range of values therebetween. In some embodiments, when the depth is 30 µm, the stress CS_30 is 65 MPa-455 MPa; optionally, CS_30 may be: 80 MPa-420 MPa, 100 MPa-380 MPa, 150 MPa-320 MPa or 200 MPa-250 MPa, such as 70 MPa, 75 MPa, 80 MPa, 85 MPa, 90 MPa, 95 MPa, 100 MPa, 105 MPa, 110 MPa, 115 MPa, 120 MPa, 125 MPa, 130 MPa, 135 MPa, 140 MPa, 150 MPa, 155MPa, 160 MPa, 170 MPa, 180 MPa, 185 MPa, 190 MPa, 200 MPa, 220 MPa, 240 MPa, 250 MPa, 270 MPa, 300 MPa, 350 MPa, 370 MPa, 420 MPa or 440 MPa, etc., or any value or range of values therebetween; optionally, CS_30 is 100 MPa-300 MPa. In some embodiments, when the depth is 50 µm, the stress CS_50 is 60 MPa-130 MPa; optionally, CS_50 may be 70 MPa-120 MPa, or 80 MPa-110 MPa or 90 MPa-100 MPa, such as 65 MPa, 70 MPa, 75 MPa, 80 MPa, 85 MPa, 90 MPa, 95 MPa, 100 MPa, 105 MPa, 110 MPa, 115 MPa, 120 MPa or 125 MPa, etc., or any value or range of values therebetween; optionally, CS_50 is 80 MPa-110 MPa.

The strengthened microcrystalline glass of the present disclosure is provided with a compressive stress layer extending from the surface to the interior of the glass, the compressive stress on the surface is low, and there is no obvious stress inflection point, the depth of the compressive stress layer Dol_zero is 110 µm-142 µm. Through the compressive stress on the surface, the depth of the stress layer, and the control of the slope of the stress curve at the two depths of 0-30 µm and 30 µm-Dol_zero, the warping deformation of the glass caused by the large difference between the surface and internal stresses is reduced.

In some embodiment, the composition (wt%) of the microcrystalline glass is: SiO₂ 58.1%-78.8% (e.g. 60%-75%, 62%-70% or 64%-68%, such as 58.4%, 59%, 59.5%, 59.8%, 60% , 60.3%, 60.5%, 61%, 61.4%, 62%, 62.5%, 62.6%, 63%, 63.5%, 64%, 64.5%, 65%, 65.5%, 66%, 67.4%, 68%, 68.5 %, 69%, 69.5%, 70%, 70.5%, 70.8%, 71%, 71.5%, 72%, 73%, 74%, 75%, 75.5%, 76%, 77% or 78, etc., or any value or range of values therebetween), Al₂O₃ 5.4%-24.1% (e.g. 6%-24%, 8%-20% or 10%-18%, such as 5.5%, 5.8%, 6%, 6.5%, 7%, 8% , 8.5%, 9%, 10%, 11%, 11.5%, 12%, 13%, 14%, 15%, 16%, 17%, 18%, 19%, 20%, 21%, 22%, or 23 % etc., or any value or range of values therebetween), MgO+ZnO 0-15% (e.g. 1%-14%, 4%-12% or 6%-10%, such as 1%, 2%, 3%, 4%, 5%, 6%, 7%, 8%, 9%, 10%, 11%, 12%, 13% or 14%, etc., or any value or range of values therebetween), B₂O₃ 0- 3.3% (e.g. 0.1%-3.0%, 0.5%-2.5% or 1.0%-2.0%, such as 0.5%, 0.8%, 1%, 1.5%, 1.8%, 2%, 2.5%, 2.7% or 3.1%, etc., or any value or range of values therebetween), P₂O₅ 0-1.9% (e.g. 0.1%-1.8%, 0.4%-1.5% or 0.8%-1.2%, such as 0.3%, 0.5%, 0.6%, 0.8%, 1.1%, 1.2 %, 1.5% or 1.7%, etc.), ZrO₂ 0-3.5% (e.g. 0.1%-3.0%, 0.5%-2.5% or 1.0%-2.0%, such as 0.8%, 1%, 1.8%, 2.0%, 2.3%, 2.5%, 2.7%, 2.9%, 3.2%, or 3.4%, etc., or any value or range of values therebetween), Li₂O 1.6%-13.7% (such as 2%-13%, 4%-10% or 6%-8%, Such as 1.8%, 2%, 2.4%, 2.8%, 3%, 3.5%, 4%, 4.5%, 5%, 6%, 7%, 8%, 9%, 10%, 11%, 12% or 13%, etc., or any value or range of values therebetween), Na₂O 1.6%-4.5% (e.g. 2.0%-4.0%, 2.5%-3.5% or 2.8%-3.2%, such as 2%, 2.5%, 3%, 3.5% , 4% or 4.4%, etc., or 3.4%, etc., or any value or range of values therebetween), K₂O ≤ 3.1% (e.g. 0.19%-3.0%, 0.49%-2.8% or 1.09%-2.5%, such as 0.5%, 1%, 1.5 %, 2%, 2.5% or 2.8%, etc., or any value or range of values therebetween), Y₂O₃ 0-8% (e.g. 0.5%-7.5%, 2.5%-6.5% or 3.5%-5.5%, such as 1 %, 2%, 3%, 4%, 5%, 6%, 7% or 7.5%, or any value or range of values therebetween), the balance is unavoidable impurities; where: Na₂O/R.₂O ≤ 0.6 (e.g. 0.05-0.58, 0.15-0.55 or 0.25-0.45, such as 0.1, 0.15, 0.2, 0.25, 0.3, 0.35, 0.4, 0.45, 0.5 or 0.55, or any value or range of values therebetween), R₂O /AlO₃≤ 5.25 (e.g. 0.05-5.2, 0.1-5.0, 0.5-4.5, 1.0-4.0 or 2.0-3.0, such as 0.05, 0.1, 0.5, 0.8, 1.2, 1.3, 1.5, 2, 2.5, 3, 3.5, 4 , 4.5 or 5, etc., or any value or range of values therebetween), where R₂O is an alkali metal oxide.

Without being bound by theory, SiO₂ is the main component that constitutes the network structure of microcrystalline glass and forms the crystal phase. It presents a silicon-oxygen tetrahedral structure in the glass, and has good chemical stability, thermal stability, and mechanical strength. In the present disclosure, the added amount of SiO₂ is 58.1%-78.8%, optionally, the added amount of SiO₂ is 60-%69%, and optionally, the added amount of SiO₂ is 61%-67%.

Without being bound by theory, Al₂O₃ may constitute the network structure of the glass in the present disclosure, which may greatly improve the chemical stability and elastic modulus of the glass, and reduce the crystallization tendency of the glass. When Al exists as the structure of [AlO₄] inside the glass, it acts as a part of the network structure and connects with [SiO₄] to fill the network, making the glass structure more compact. Since its molar volume is larger than [SiO₄], ions are easier to move in the glass body during ion exchange, which is more conducive to ion exchange; when Al exists as the structure of [AlO₆] inside the glass, it is dissociated outside the network, and enriches the network in the form of network fillers, which increases the bulk density and Vickers hardness of the glass, and tamps the network. In the present disclosure, the added amount of Al₂O₃ is 5.4%-24.1%; optionally, the added amount of Al₂O₃ is 5.6-18%; optionally, the added amount of Al₂O₃ is 5.6-7.8%.

Without being bound by theory, MgO and ZnO, as optional components, has the effect of reducing the difficulty of melting of glass and improving the thermal stability of glass, and may also be used as crystal nucleating agents by taking advantage of their characteristics of easy phase separation. In the present disclosure, the added amount of MgO+ZnO is 0-15%, optionally, the added amount of both MgO and ZnO does not exceed 14%, wherein optionally, the added amount of MgO does not exceed 8.5%, and optionally, the added amount of ZnO does not exceed 10.5%.

Without being bound by theory, B₂O₃, as a network-formed oxide, has the effect of improving the melting characteristics of glass, and the appropriate content of B₂O₃ also has the effect of improving the strength and chemical durability of microcrystalline glass. In the present disclosure, the added amount of B₂O₃ is 0-3.3%, and optionally, the added amount is 1.5%-3%.

Without being bound by theory, P₂O₅ is added as a crystalline nucleating agent in the present disclosure, and the added amount does not exceed 1.9%; optionally, the added amount does not exceed 1.5%; or no addition at all.

Without being bound by theory, ZrOz has the effect of improving the stability of the glass, and also has the effect of refining grains and controlling the grain size during crystallization. In the present disclosure, the added amount does not exceed 3.5%; and optionally, the added amount does not exceed 2.5%.

Without being bound by theory, Alkali metal oxides Li₂O, Na₂O, K₂O, etc., as the outer body of the network, have the effect of supplying oxygen, which may significantly reduce the melting temperature of the glass and adjust the viscosity-temperature characteristic of the glass. Li₂O and Na₂O are the main components of ion exchange. The added amount affects the ion exchange layer depth, surface stress, and stress distribution of the compressive stress layer of the microcrystalline glass products. In addition, Li₂O also has the effect of promoting crystal formation and is a necessary component of the crystal phase composition. In the present disclosure, the added amount of Li₂O is 1.6%-13.7%; optionally, the added amount of Li₂O is 2.5%-12.5%; and optionally, the added amount of Li₂O is 5.8%-12.0%. The added amount of Na₂O is 0.5%-4.5%; optionally, the added amount of Na₂O is 1.6%-4.1%; and optionally, the added amount of Na₂O is 1.7% -3.0%. The added amount of K₂O does not exceed 3.1%; optionally, the added amount of K₂O does not exceed 1.7%; and optionally, the added amount of K₂O does not exceed 1.5%; or no addition at all.

Without being bound by theory, Y₂O₃ has the effect of tamping the network structure strength of microcrystalline glass and increasing Young's modulus. The inventors found that adding a certain amount of Y₂O₃ may also homogenize the stress distribution and reduce the possibility of warping, further ensuring the drop resistance strength and deformation stability of the product. In the present disclosure, the added amount of Y₂O₃ is 0-8%; optionally, the added amount of Y₂O₃ is 0.5%-4%; and optionally, the added amount of Y₂O₃ is 2%-4%.

The inventors find that by controlling the ratio of Na₂O/R₂O and R₂O/Al₂O₃, the stress distribution in the compressive stress layer may be effectively homogenized and the warpage of the glass may be reduced. In the present disclosure, Na₂O/R₂O ≤ 0.6; optionally, Na₂O/R.₂O does not exceed 0.35; and optionally, Na₂O/R.₂O does not exceed 0.25. The ratio of R₂O/Al₂O₃ ≤ 5.25, wherein when the value is higher than 5.25, on the one hand, it may cause the network channel structure of the glass becomes small due to the content of Al is too low, which greatly affects the migration efficiency of ions in the network channel; on the other hand, it may affect the control of the type of the crystal phase, which may adversely affects the dimensional stability and optical properties of the glass. Optionally, R₂O/Al₂O₃ ≤ 2.8; optionally, R₂O/Al₂O₃ ≤2; optionally, R₂O/Al₂O₃ ≤ 1.2; and optionally, R₂O/Al₂O₃ ≤ 0.8.

In some embodiments, the crystal phase of the microcrystalline glass includes: one or more of lithium disilicate, lithium petalite, β-quartz solid solution, and spinel, wherein the crystallinity is 70%-98%, such as 85%-96%, 88%-95%, or 90%-93%, such as 70%, 74%, 78%, 80%, 82%, 84%, 86%, 88%, 90%, 91%, 92%, 93%, 94%, 95%, 96%, 97%, 98%, or any value or range of values therebetween. Theoretically, the higher the crystallinity, the smaller the possibility of warping deformation due to strengthening stress, because under the condition of a temperature lower than 500 °C, the crystal does not participate in ion exchange, and the deformation mainly comes from the unbalanced stress on the two main surfaces after the strengthening of the residual glass phase, which causes the glass must change the area to achieve force balance (pressure P=F/S), that is, deformation occurs; but the higher the crystallinity, the less the residual glass phase, and it is mainly the glass phase that can participate in chemical ion exchange, so that the less the glass phase, the more limited the effect of toughening by chemical strengthening. Therefore, it is necessary to find a balance between strength and dimensional stability, that is, to find a balance in the ratio distribution of the crystal phase and the glass phase. The inventors find that the best option for the glass phase is to be controlled within 5%-10%; optionally, the crystallinity is 80%-95%; and optionally, the crystallinity is 90%-95%. In terms of crystal phase selection, since there will be a process of transformation from lithium silicate crystal phase to lithium disilicate crystal phase during the crystallization process, it is necessary to control the proportion of residual lithium silicate crystal phase in the finished product, and it requires that the residual lithium silicate crystal phase is less than 5%, since too much lithium silicate crystal phase may significantly weaken the optical characteristics of the product, resulting in a bluish color of the product.

Some embodiments of the present disclosure also provide a preparation method for the strengthened microcrystalline glass, wherein in the aspect of preparing the base glass, melting and molding are performed by well-known methods in the art; and the formed base glass is crystallized and strengthened by the following steps:
step 1: performing a crystallization treatment on a base glass, to obtain a basic microcrystalline glass; and
step 2: performing an ion exchange to the basic microcrystalline glass that has undergone the crystallization treatment.

In some embodiments, the crystallization treatment in step 1 includes the following steps: putting the base glass into a box-type crystallization furnace for a three-stage heat treatment, wherein the first step is to raise the temperature to 520°C-580°C (e.g. 530°C , 540°C, 550°C, 560°C or 570°C, etc.), and keep the temperature for 200 min -300 min (e.g. 220 min -280 min, 230 min -260 min or 240 min -250 min, such as 210 min, 220 min, 230 min, 240 min, 250 min, 260 min, 270 min, 280 min or 290 min, etc., or any value or range of values therebetween); the second step is to raise the temperature to 600-640°C (e.g. 605°C-635°C , 610°C-630°C or 615°C-625°C, such as 600°C, 610°C, 620°C, 630°C, 635°C, 650°C or 660°C, etc., or any value or value range therebetween), and keep the temperature for 100 min -150 min (e.g. 105 min -145 min, 110 min -140 min or 120 min -130 min, such as 110 min, 115 min, 120 min, 125 min, 130 min, 135 min, 140 min or 145 min, etc., or any value or range of values therebetween); and the third step is to raise the temperature to 645°C-740°C (such as 645°C, 650°C, 660°C, 690°C, 740°C, etc., or any value or range of values therebetween), and keep the temperature for 180 min -270 min (e.g. 190 min-260 min, 200 min-250 min or 210 min-240 min, such as 190 min, 200 min, 210 min, 220 min, 230 min, 240 min , 250 min or 260 min, etc., or any value or range of values therebetween); and then cooling down the base glass to obtain the basic microcrystalline glass.

Without being bound by theory, through the above-mentioned three-stage heat treatment process as mentioned above, on the one hand, the present disclosure may effectively control the crystallinity of the glass, and reduce, while ensuring the strength of the microcrystalline glass, the possibility of warping deformation caused by strengthening stress; and on the other hand, through the crystallization time at a high temperature above 645°C being not less than 180 min, it can effectively control the glass crystal phase, reduce the proportion of residual lithium silicate crystal phase in the glass product, and prevent discoloration of the product.

In some embodiments, the ion exchange in step 2 includes two ion exchanges, including:
a first-time ion exchange: immersing the basic microcrystalline glass into a first molten salt bath to perform the first-time ion exchange, wherein the first molten salt bath includes at least 75 wt% (e.g., 75wt%-100wt%, 80wt%-95wt% or 85wt%-90 wt%, such as 77wt%, 80wt%, 82wt%, 85wt%, 88wt%, 90wt%, 95wt%, 97wt% or 100wt%, etc., or any value or range of values therebetween) of NaNO₃, a temperature of the first-time ion exchange is 430°C-450°C (e.g., 434°C-448°C, 438°C-445°C or 440°C-442°C, such as 432°C, 435°C, 440°C, 442°C, 445°C or 448°C, etc., or any value or range of values therebetween), and the time duration is 6-11 h (e.g. 6.5 h-10.5 h, 7.5 h-9.5 h or 8.0 h-9.0 h, such as 6.5 h, 7 h, 7.5 h, 8 h, 8.5 h, 9 h, 9.5 h, 10 h or 10.5 h, etc., or any value or range of values therebetween); and
a second-time ion exchange: immersing the basic microcrystalline glass that has undergone the first-time ion exchange into a second molten salt bath to perform the second-time ion exchange, wherein the second molten salt bath at least comprises two molten salts of KNO₃ and LiNO₃, a temperature of the second-time ion exchange is 420°C-440°C (e.g. 424 ° C-438° C, 426° C-435° C or 428° C-432° C, such as 424° C, 426° C, 428° C, 430° C, 432° C, 435° C or 438° C, etc., or any value or range of values therebetween), and the time duration is less than or equal to 60 min (e.g. 1 min -60 min, 5 min -50 min or 10 min -40 min, such as 3 min, 5 min, 8 min, 10 min, 15 min, 20 min, 25 min, 30 min , 35 min, 40 min or 45 min, etc., or any value or range of values therebetween).

In some embodiments, the content of KNO₃ in the second molten salt bath is greater than or equal to 90wt% (e.g., 90wt%-99.99wt%, 92wt%-98wt% or 98wt%-99.98wt%, such as 92wt%, 93wt%, 94wt%, 95wt% %, 96wt%, 97wt%, 98wt%, 99wt%, 99.2wt%, 99.5wt%, 99.7wt%, 99.8wt%, 99.9wt%, 99.92wt%, 99.95wt%, 99.98wt% or 99.99wt%, etc., or any value or range of values therebetween), and the content of LiNO₃ is represented as: 0 < LiNO₃ ≤ 0.15wt% (e.g., 0.01wt%-0.15wt%, 0.04wt%-0.12wt% or 0.06wt%-0.10wt%, such as 0.02 wt%, 0.04 wt%, 0.05 wt%, 0.08 wt%, 0.1 wt%, 0.12 wt%, 0.13 wt% or 0.14 wt%, etc., or any value or range of values therebetween).

Without being bound by theory, after the base glass is processed by the crystallization process, the present disclosure obtains the strengthened microcrystalline glass with required stress distribution characteristics through the two-step ion exchange. In the first ion exchange (IOX1) process, the first molten salt bath contains at least 75% of NaNO3 salt, the exchange temperature is 430°C -450°C, and the exchange time is 6 h -11h, so that the largest linear density of tensile stress may be formed in the first ion exchange process (CT_LD, =∑0CT_CVCT/Dol_zero), to maximize the strength of the glass. The first molten salt bath optionally does not contain potassium salt, even if it contains potassium salt, content of the potassium salt does not exceed 25wt%, because the potassium salt contained in the molten salt bath may cause a large amount of K+ to adhere to the surface of the glass in IOX1. Since the radius of K+ is much larger than that of Na+ and Li+, it may greatly hinder the exchange of Na and Li, and ultimately may not achieve high strength. In the second ion exchange (IOX2) process, the content of KNO3 in the second molten salt bath is greater than or equal to 90wt%, and a small amount of LiNO3 (0 < LiNO3 ≤ 0.15 wt%) is contained, due to the small radius of Li⁺ and its high reactivity, the exchange rate of Li⁺ with Na⁺ on the surface of the glass is at least more than 3 times of the exchange rate of K⁺/Na⁺, so that the presence of a small amount of Li⁺ in the IOX2 salt bath may obviously inhibit the exchange reaction equilibrium to perform between K⁺ and Na+ on the surface of the glass in the salt bath, thereby avoiding the accumulation of K⁺ on the surface of the glass. The concentration distribution of K⁺ along the thickness direction is weakened, thereby reducing the surface compressive stress difference between the inner and outer layers of the glass, so that the obtained slop of stress curve changes more smoothly and naturally, and there is no obvious slope mutation (turning point). In terms of ion exchange time, a short-time exchange of less than or equal to 60 min is adopted. Through the control of the molten salt and exchange time as mentioned above, it may effectively prevent the compressive stress on the surface of the strengthened microcrystalline glass from being too high, prevent the stress difference within the distance per unit thickness from being too large, and reduce the glass warpage caused thereby. In addition, the compressive stress gradient difference of the obtained strengthened microcrystalline glass is small and relatively uniform. Compared with the current mainstream NAS Glass and LAS Glass, for the strengthened microcrystalline glass prepared by the present disclosure, when the depth of the stress layer is represented as 0µm ≤ Dol < 30µm, the absolute value k1 of the stress curve between any two points separated by 20µm on the curve is represented as: 2.45 < |k1| < 5.05; when the depth of the stress layer is represented as 30 µm ≤ Dol < Dol_zero, the absolute value k2 of the slope of the stress curve between any two points separated by 20µm on the curve is represented as 1≤ |k2|< 1.5, wherein in the range of 0-30 µm, the slope is low, the area of the "trapezoid" formed by the stress curve and depth X and Y axes may be larger, the corresponding CT integral is not weaker than that of ordinary strengthened glass, and the overall drop resistance is even better than that of ordinary strengthened glass.

Various performance indicators of the microcrystalline glass products in the embodiments, examples, and comparative examples of the present disclosure are tested by the following method: using an SLP2000 stress tester (light source is 518nm) produced by Japan Tetsuhara Co., Ltd. for measurement. The crystal phase type and the crystallinity are detected by a method of XRD pulverization (Type: Thermo Fisher XRD-6100). Explanations of some terms in the present disclosure are as follows:
CS: compressive stress on the surface, unit: MPa;
CS_30: CS value corresponding to the point Dol=30µm on the stress curve;
CS_50: CS value corresponding to the point Dol=50µm on the stress curve;
Dol_zero: CS value corresponding to the point CS=0 MPa on the stress curve, generally refers to the maximum Dol value that can be detected by the FSM6000LE or SLP2000;
Slope K: the slope value of a straight line formed between any two specified points on the stress curve;
Amount of warpage: when placing the glass sheet horizontally on a standard marble platform (flatness <0.01mm), the maximum height difference between any point on the same plane of the glass sheet and the center point;
B20 value of Sandpaper surface drop height: in a set of drop tests consisting of several samples, the corresponding drop height value when 20% of the samples fail. The B20 value is a common reference value used by mobile electronic device terminal manufacturers to evaluate the reliability of the whole device. Some embodiments of the present disclosure also provide the use of strengthened microcrystalline glass, which may be used as cover plates for mobile phones, cover plates for tablet computers, cover plates for watches, and cover plates for car displays.

The strengthened microcrystalline glass of the present disclosure has a low surface CS, and the stress gradient difference, extending from the surface to a certain depth, is small and uniform, which may significantly improve the warping problem caused by excessive stress gradient differences after strengthening. The amount of warpage is less than or equal to 0.2 mm; meanwhile, because the CT integral of the microcrystalline glass of the present disclosure is not weaker than that of ordinary strengthened glass, and the strength gain effect brought by the crystal, the overall drop resistance strength is even better than that of ordinary strengthened glass. The B20 value of the drop height of the sandpaper surface of the crystal glass is represented as: B20≥1.3m. The strengthened microcrystalline glass of the present disclosure has excellent warping resistance and may be widely used in the field of 3C electronic products.

### Embodiments

In order to further clearly explain and illustrate the technical solution of the present disclosure, the following non-limiting embodiments are provided. Efforts have been made to ensure numerical accuracy in the embodiments of the present disclosure, but some errors and deviations must be considered. The composition itself is given in the percentage of weight (wt%) based on oxides and has been normalized to 100%, and the thickness of each sample in each of the embodiments is 0.65mm.

Various performance indicators of the microcrystalline glass products in the following embodiments and comparative examples are tested using the methods described in the specific embodiments above.

**Table 1 sample composition, process parameter, and performance table in embodiments 1-10**

| Embodiment | | 1 | 2 | 3 | 4 | 5 | 6 | 7 | 8 | 9 | 10 |
|---|---|---|---|---|---|---|---|---|---|---|---|
| SiO₂ | | 58.5% | 61.8% | 70.5% | 59.4% | 67.7% | 78.8% | 74.7% | 58.1% | 68.5% | 60.4% |
| Al₂O₃ | | 24.1% | 19.4% | 7.4% | 23.0% | 16.7% | 5.6% | 5.6% | 20.7% | 7.2% | 16.1% |
| MgO | | - | 3.2% | - | 8.5% | 4.0% | - | - | 3.7% | - | 1.5% |
| ZnO | | 10.5% | - | - | 5.5% | - | - | - | - | - | - |
| B₂O₃ | | - | 3.3% | 2.9% | - | - | 1.9% | - | - | 2.0% | - |
| P₂O₅ | | - | 1.1% | 1.9% | - | - | - | - | 1.5% | 1.5% | 1.9% |
| ZrO₂ | | 1.5% | 2.0% | 3.5% | 1.5% | - | - | 2.3% | 0.0% | 2.5% | 1.8% |
| Li₂O | | 2.5% | 3.8% | 12.2% | 1.6% | 4.4% | 12.0% | 13.7% | 13.5% | 11.7% | 5.8% |
| Na₂O | | 1.9% | 4.5% | 1.6% | 0.5% | 4.1% | 1.7% | 2.0% | 2.5% | 3.0% | 3.0% |
| K₂O | | 1.0% | - | - | - | 3.1% | - | 1.7% | - | 0.6% | 1.5% |
| Y₂O₃ | | - | 0.9% | - | - | - | - | - | - | 3.0% | 8.0% |
| Total | | 100.0 % | 100.0 % | 100.0 % | 100.0 % | 100.0 % | 100.0 % | 100.0 % | 100.0 % | 100.0 % | 100.0 % |
| Na₂O/R₂O | | 0.35 | 0.54 | 0.11 | 0.24 | 0.35 | 0.12 | 0.12 | 0.16 | 0.196 | 0.29 |
| R₂O/Al₂O₃ | | 0.22 | 0.43 | 1.87 | 0.09 | 0.69 | 2.45 | 3.11 | 0.77 | 2.12 | 0.64 |
| Crystallization process | First stage (temperature *time) | 540°C*300 min | 550°C*270 min | 560°C*270 min | 520°C*300 min | 580°C*200 min | 520°C*300 min | 560°C*240 min | 560°C*240 min | 560°C*270 min | 580°C*200 min |
| | Second stage (temperature *time) | 640°C *100 min | 600°C *150 min | 610°C *120 min | 640°C *120 min | 640°C *150 min | 620°C *110 min | 640°C *150 min | 635°C *150 min | 630°C *120 min | 650°C *150 min |
| | Third stage (temperature *time) | 740°C *180 min | 670°C *210 min | 650°C *200 min | 740°C *180 min | 650°C *200 min | 740°C *180 min | 645°C *200 min | 630°C *200 min | 665°C *270 min | 660°C *200 min |
| main crystal phase | | spinel | Lithium petalite | Lithium disilicate + Lithium petalite | spinel | Lithium petalit -e | β -quart z solid soluti on | - quartz solid solute -on + lithium disilic -ate | Lithium disilic -ate+ lithium petalit -e | Lithium disilic -ate+ lithium petalit -e | Lithium petalit -e |
| crystallinity | | 70% | 88% | 95% | 72% | 90% | 80% | 85% | 90% | 90% | 88% |
| IOX 1 | salt bath /wt% | 100% NaNO ₃ | 100% NaNO ₃ | 99.8% NaNO ₃+0.2 % LiNO ₃ | 100% NaNO ₃ | 100% NaNO ₃ | 100% NaNO ₃ | 99% NaNO ₃+0.8 % KNO₃ + 0.2% LiNO ₃ | 100% NaNO ₃ | 75% NaNO ₃+25 % KNO₃ | 100% NaNO ₃ |
| | temperature *time | 450°C *9h | 440°C *11h | 440°C *8h | 440°C *9h | 440°C *7h | 430°C *7.5h | 430°C *6h | 440°C *9h | 435°C *9h | 440°C *7h |
| IOX 2 | salt bath /wt% | 90%K NO₃+ 0.15% | 92%K NO₃+ 0.1% | 99.9% KNO₃ +0.1 | 99.98 %KN O₃+0. | 99.95 %KN O₃+0. | 98%K NO₃+ 0.15% | 99.97 %KN O₃+0. | 95%K NO₃+ 0.15% | 90%K NO₃+ 0.12% | 99.85 %KN O₃+0. |
| | | LiNO ₃+4.8 5%Na NO₃ | LiNO ₃+7.9 %Na NO₃ | %LiN O₃ | 02%L iNO₃ | 05%L iNO₃ | LiNO ₃+1.8 5%Na NO₃ | 03%L iNO₃ | LiNO ₃+4.8 5%Na NO₃ | LiNO ₃+9.8 8%Na NO₃ | 15%L iNO₃ |
| | temperature *time | 440°C *15mi n | 420°C *30mi n | 440°C *8min | 420°C *15mi n | 440°C *25mi n | 430°C *50mi n | 440°C *60mi n | 440°C *10mi n | 430°C *15mi n | 440°C *12mi n |
| CS/MPa | | 183 | 144 | 256 | 327 | 331 | 528 | 550 | 268 | 287 | 355 |
| CS_30/MPa | | 105 | 69.9 | 143.5 | 234 | 250.6 | 410.1 | 423.4 | 157.9 | 176 | 268.6 |
| CS_50/MPa | | 84.6 | 110.4 09 | 83.12 5 | 60 | 85.14 | 103.4 9 | 111.3 2 | 90.09 | 106.5 | 81.74 |
| Dol_zero/µm | | 110 | 124.1 | 112.5 | 110 | 116 | 129 | 142 | 127 | 121 | 111 |
| \|k1\| | | 2.45-2 .8 | 2.2-2. 9 | 3.4-4. 0 | 2.9-3. 4 | 2.45-2 .9 | 2.6-3. 5 | 3.0-3. 8 | 3.1-4. 3 | 3.2-4. 1 | 2.45-2 .9 |
| \|k2\| | | 1.2-1. 5 | 1.3-1. 5 | 1.2-1. 5 | 1.0-1. 4 | 1.1-1. 4 | 1.1-1. 5 | 1.0-1. 5 | 1.0-1. 3 | 1.3-1. 5 | 1.1-1. 5 |
| Amount of warpage/mm | | ≤0.10 | ≤0.15 | ≤0.15 | ≤0.12 | ≤0.15 | ≤0.18 | ≤0.18 | ≤0.08 | ≤0.15 | ≤0.15 |
| B20 value of drop height of sandpaper surface/m | | 1.5 | 1.4 | 2.1 | 2.3 | 1.4 | 1.7 | 1.4 | 1.5 | 1.9 | 2.0 |

**Table 2 sample composition, process parameter, and performance table in embodiments 11-16 and comparative examples 1-4**

| Embodiments | 11 | 12 | 13 | 14 | 15 | 16 | Comparative example 1 | Comparative example 2 | Comparative example 3 | Comparative example 4 | |
|---|---|---|---|---|---|---|---|---|---|---|---|
| SiO₂ | 68.5% | 68.5% | 68.5% | 68.5% | 68.5% | 58.5% | 68.5% | 70.5% | 68.5% | 68.5% | |
| Al₂O₃ | 7.2% | 7.2% | 7.2% | 10.2% | 7.2% | 17.2% | 7.2% | 7.4% | 7.2% | 7.2% | |
| MgO | - | - | - | - | - | - | - | - | - | - | |
| ZnO | - | - | - | - | - | - | - | - | - | - | |
| B₂O₃ | 2.0% | 2.0% | 2.0% | 2.0% | 2.0% | 2.0% | 2.0% | 2.9% | 2.0% | 2.0% | |
| P₂O₅ | 1.5% | 1.5% | 1.5% | 1.5% | 1.5% | 1.5% | 1.5% | 1.9% | 1.5% | 1.5% | |
| ZrO₂ | 2.5% | 2.5% | 2.5% | 2.5% | 2.5% | 2.5% | 2.5% | 3.5% | 2.5% | 2.5% | |
| Li₂O | 11.7% | 11.7% | 11.7% | 8.7% | 11.7% | 11.7% | 11.7% | 12.2% | 11.7% | 11.7% | |
| Na₂O | | 3.0% | 3.0% | 3.0% | 3.0% | 3.0% | 3.0% | 3.0% | 1.6% | 3.0% | 3.0% |
| K₂O | | 0.6% | 0.6% | 0.6% | 0.6% | 0.6% | 0.6% | 0.6% | - | 0.6% | 0.6% |
| Y₂O₃ | | 3.0% | 3.0% | 3.0% | 3.0% | 3.0% | 3.0% | 3.0% | - | 3.0% | 3.0% |
| Total | | 100.0 % | 100.0 % | 100.0 % | 100.0 % | 100.0 % | 100.0 % | 100.0 % | 100.0 % | 100.0 % | 100.0 % |
| Na₂O/R₂O | | 0.196 | 0.196 | 0.196 | 0.243 | 0.196 | 0.196 | 0.196 | 0.11 | 0.196 | 0.196 |
| R₂O/Al₂O₃ | | 2.12 | 2.12 | 2.12 | 1.20 | 2.12 | 0.89 | 2.12 | 1.87 | 2.12 | 2.12 |
| Crystallization process | First stage (temperature *time) | 560°C *240 min | 560°C *270 min | 560°C *270 min | 560°C *240 min | 520°C *200 min | 560°C *240 min | 560°C *240 min | 560°C *270 min | 560°C *240 min | 560°C *240 min |
| | Second stage (temperature *time) | 600°C *120 min | 630°C *120 min | 630°C *120 min | 600°C *120 min | 600°C *120 min | 600°C *120 min | 600°C *120 min | 610°C *120 min | 600°C *120 min | 600°C *120 min |
| | Third stage (temperature *time) | 735°C *270 min | 665°C *270 min | 665°C *270 min | 735°C *270 min | 735°C *270 min | 735°C *270 min | 625°C *180 min | 650°C *200 min | 625°C *180 min | 625°C *180 min |
| main crystal phase | | β -quart z solid solution+ lithium disilic ate+ lithium petalite | Lithium disilic ate+ Lithium petalite | Lithium disilic ate+ Lithium petalite | Lithium disilicate+ Lithium petalite+ β-quartz solid solution | β -quart z solid soluti on+ lithium disilicate+ lithium petalite | β -quart z solid solution | Lithium silicate+ Lithium disilicate+ Lithium petalite | Lithium disilicate+ Lithium petalite | Lithium silicate+ Lithium disilicate+ Lithium petalite | Lithium silicate+ Lithium disilicate+ Lithium petalite |
| crystallinity | | 90% | 90% | 90% | 70% | 72% | 70% | 90% | 95% | 98% | 90% |
| IOX 1 | salt bath /wt% | 75% NaNO | 100% NaNO | 75% NaNO | 75% NaNO | 75% NaNO | 75% NaNO | 75% NaNO | 100% NaNO | 100% NaNO | 75% NaNO |
| | | ₃+25 % KNO₃ | ₃ | ₃+25 % KNO₃ | ₃+25 % KNO₃ | ₃+25 % KNO₃ | ₃+25 % KNO₃ | ₃+25 % KNO₃ | 3 | 3 | ₃+25 % KNO₃ |
| | temperature *time | 435°C *9h | 435°C *9h | 435°C *6h | 435°C *9h | 435°C *9h | 435°C *9h | 435°C *9h | 440°C *8h | 435°C *9h | 460°C *10h |
| IOX 2 | Salt bath/wt % | 90%K NO₃+ 0.12% LiNO ₃+9.8 8%Na NO₃ | 99.95 %KN O₃+0. 05%L iNO₃ | 90%K NO₃+ 0.12% LiNO ₃+9.8 8%Na NO₃ | 90%K NO₃+ 0.12% LiNO ₃+9.8 8%Na NO₃ | 90%K NO₃+ 0.12% LiNO ₃+9.8 8%Na NO₃ | 90%K NO₃+ 0.12% LiNO ₃+9.8 8%Na NO₃ | 99.48 %KN O₃+0. 02%L iNO₃+ 0.5% NaNO ₃ | 100% KNO₃ | 99.48 %KN O₃+0. 02%L iNO₃+ 0.5% NaNO ₃ | 90%K NO₃+ 0.12% LiNO ₃+9.8 8%Na NO₃ |
| | temperature *time | 430°C *15mi n | 430°C *15mi n | 430°C *15mi n | 430°C *15mi n | 430°C *15mi n | 430°C *15mi n | 430°C *45mi n | 440°C *8min | 450°C *15mi n | 430°C *15mi n |
| CS/MPa | | 285 | 323 | 254 | 318 | 311 | 350 | 335 | 756 | 284 | 281 |
| CS_30/MPa | | 163 | 183.2 | 148 | 152 | 178 | 215 | 231 | 227.8 | 126 | 181 |
| CS_50/MPa | | 108.5 | 119.1 | 101.6 | 82 | 99 | 93 | 108.5 | 113.1 | 82 | 112 |
| Dol_zero/µm | | 124 | 127.5 | 114 | 112 | 125 | 112 | 119 | 117.5 | 157 | 162 |
| \|k1\| | | 3.5-3. 9 | 4.1-4. 8 | 3.1-3. 6 | 4.7-5. 05 | 4.3-4. 6 | 4.4-4. 8 | 3.4-3. 9 | 12.8-1 9.0 | 5.2-6. 8 | 3.1-3. 7 |
| \|k2\| | | 1.2-1. 5 | 1.3-1. 5 | 1.1-1. 4 | 1.2-1. 5 | 1.3-1. 5 | 1.3-1. 5 | 1.7-3. 0 | 1.7-3. 2 | 0.6-1. 1 | 1.0-1. 4 |
| Amount of warpage/mm | | ≤0.15 | ≤0.11 | ≤0.11 | ≤0.13 | ≤0.13 | ≤0.2 | ≤0.15 | 0.18-0 .45 | 0.3-0. 60 | 0.22-0 .38 |
| B20 value of drop height of sandpaper surface/m | | 1.7 | 2.1 | 1.3 | 1.3 | 1.3 | 1.4 | 1.0 | 0.93 | 0.92 | 0.88 |

| | | | | | | | | | | | |
|---|---|---|---|---|---|---|---|---|---|---|---|
| Note: The sandpaper drop method is: using 176g load, where the sandpaper is 180 mesh SiC sandpaper, performing a directional drop test from a height of 40cm, dropping once at each height, increasing 10cm each time, and recording the broken height. | | | | | | | | | | | |

### Description of performance results:

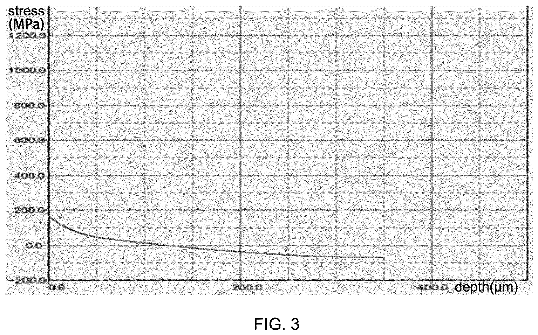

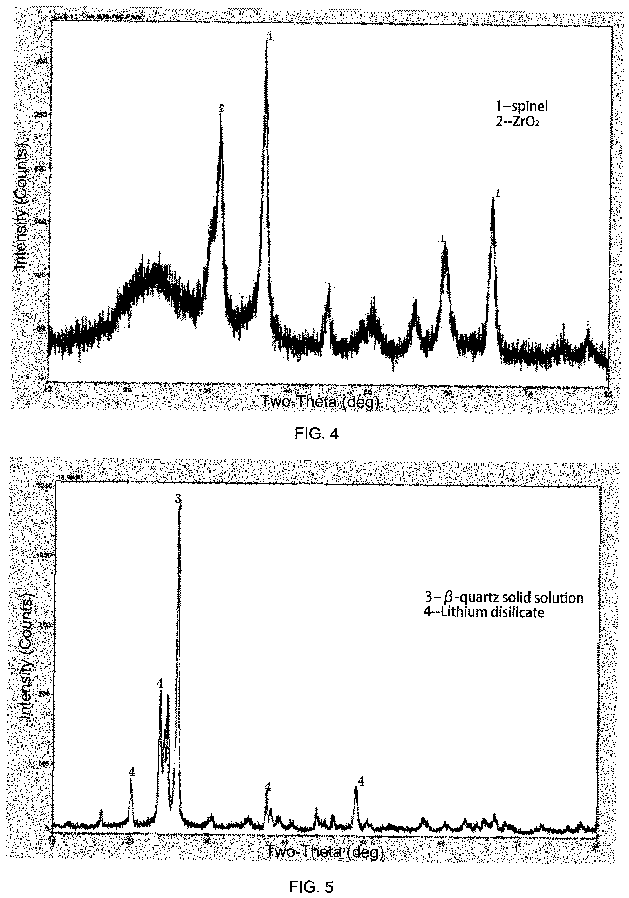

FIG 3 shows a curve diagram of the microcrystalline glass stress prepared in Embodiment 1, and as can be seen from the figure, the surface CS of the microcrystalline glass is low, the compressive stress, extending from the surface to the inside, is small and relatively uniform. FIG 4 shows the XRD spectrum of the microcrystalline glass of Embodiment 1, wherein the main crystal is spinel. In terms of performance results, the prepared glass has good warpage resistance (amount of warpage ≤ 0.1mm), and excellent drop resistance (B20 is 1.5m).

FIG 5 shows the XRD spectrum of the microcrystalline glass prepared in Embodiment 7, as can be seen from the figure, the main crystals are β-quartz solid solution and lithium disilicate.

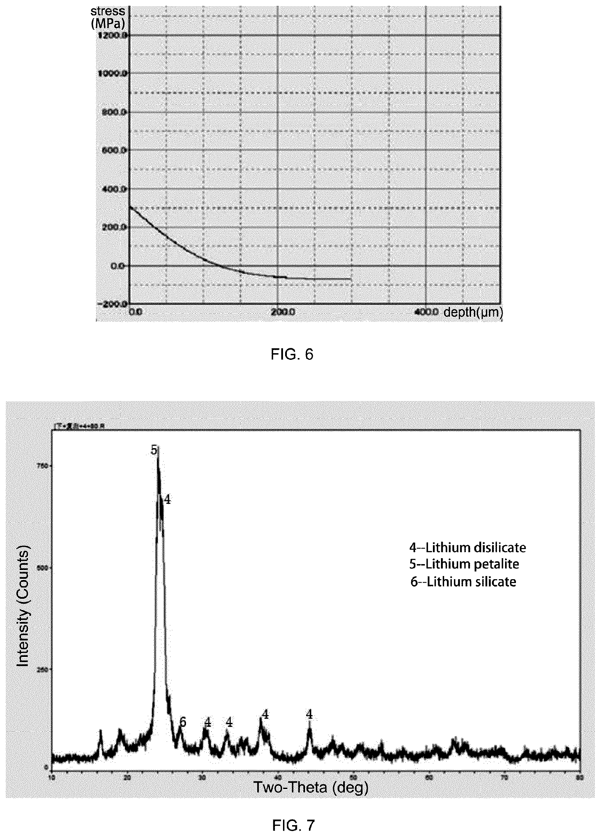

FIG 6 shows the stress curve diagram of the microcrystalline glass prepared in Embodiment 15, and as can be seen from the figure, the surface CS of the microcrystalline glass is low, and the compressive stress gradient difference is small and relatively uniform. In terms of performance results, the prepared glass has good Excellent warping resistance (amount of warpage ≤ 0.13mm), and good drop resistance (B20 is 1.3m).

Comparing Embodiments 1-16 and Comparative Examples 1-4, it can be seen that the CS on the surface of the glass in Embodiments 1-16 is low, and the stress curves are approximately linearly distributed. On the stress curves of 0-30 µm and 30-Dol_zero, the slope |k1| is represented as 2.4 ≤ |k1| ≤ 5.05, the slope |k2| is represented as 1.0 ≤ |k2| ≤ 1.5, and the compressive stress gradient difference thereof is small and relatively uniform. In terms of performance data of the prepared microcrystalline glass, the amount of warpage meets the application requirement of being less than or equal to 0.2mm, and the B20 value of the drop height of the sandpaper surface meets the requirement of being greater than or equal to 1.3m. Referring to Comparative Examples 1-4, it can be seen that the stress distribution characteristics of Comparative Example 1 are: on the stress curve of 30-Dol_zero layer depth, the slope |k2| is relatively large (1.7-3.0), and in the corresponding performance data of the prepared microcrystalline glass, although the amount of warpage is less than or equal to 0.15mm, the performance is good, but the performance is poor in terms of the B20 value of the drop height of the sandpaper surface. The stress distribution characteristics of Comparative Example 2 are: on the stress curve of 0-30µm layer depth, the slope |k1| is very large (12.8-19.0), in the corresponding performance data of the prepared microcrystalline glass, the amount of warpage is 0.18mm-0.45mm, the B20 of drop height of sandpaper surface is 0.93m, and the performance is very poor. The stress distribution characteristics in Comparative Example 3 are: the depth of stress layer is Dol_zero (157µm), slope |k1| is larger (5.2-6.8), |k2| is smaller (0.6-1.1), the drop resistance strength is poor (B20 is 0.92m), and the warpage resistance performance is poor (the amount of warpage is 0.3mm-0.6mm). The stress distribution characteristics in Comparative Example 4 are: the depth of the stress layer Dol_zero is relatively large (162µm), and in the corresponding performance data of the prepared microcrystalline glass, the warpage resistance performance is slightly poorer (0.22µm -0.38µm), and the drop resistance performance is poorer (B20 is 0.88m).

In addition, from Comparison of Embodiments 11 and 14, it can be seen that when the preparation process is the same (including the crystallization process and ion exchange process), in terms of the composition of the microcrystalline glass, a lower R₂O/Al₂O₃ ratio is selected, which is very important for obtaining a glass with low warpage, and the glass with better performance (i.e., lower warpage) may further be obtained.

From Comparison of Embodiments 12 and 13, it can be seen that when the glass composition and crystallization process are the same, in the ion exchange process, the salt bath of IOX1 does not contain K salt, which is beneficial for obtaining high-strength glass, and it may further obtain the glass with better performance (i.e., higher strength).

From Comparison of Embodiments 11-13, and 15 with Comparative Examples 1 and 3-4, it can be seen that, when the glass composition is the same, the temperatures of the third stage of the crystallization process in Embodiments 11-13 and 15 are within the temperature range of the present disclosure, which can avoid the occurrence of lithium silicate in the crystal phase of the microcrystalline glass, thereby further ensuring the excellent optical performance of the product; the temperatures in the third stage of the crystallization process in Comparative Examples 1 and 3-4 are too low, resulting in occurrence of lithium silicate in the crystal phase of the microcrystalline glass, which would obviously weaken the optical performance of the product. FIG 7 shows the XRD spectrum of the microcrystalline glass of Comparative Example 1, and it can be seen from the figure that the crystals thereof include lithium silicate, lithium disilicate and lithium petalite.

The above are only the implementations of the present disclosure, and do not limit the patent scope of the present disclosure. Any equivalent structure or equivalent process conversion made by using the contents of the present disclosure and the accompanying drawings, or directly or indirectly used in other related technologies fields, are equally included in the patent protection scope of the present disclosure.

## Claims

1. A low-warping strengthened microcrystalline glass, **characterized by** comprising a compressive stress layer extending from a surface to an interior of the glass, wherein a compressive stress on the surface of the glass is represented as CS < 550 MPa, and the compressive stress layer has the following stress distribution:
(a) when a depth of the stress layer is represented as 0 µm ≤ Dol < 30 µm, a stress distribution curve is approximately a linear distribution, and an absolute value k1 of a slope of the stress curve between any two points separated by 20 µm on the curve is represented as 2.45 < |k1| < 5.05; and
(b) when the depth of the stress layer is represented as 30 µm ≤ Dol ≤ Dol_zero, the stress distribution curve is approximately a linear distribution, and an absolute value k2 of a slope of the stress curve between any two points separated by 20 µm on the curve is represented as 1 ≤ |k2| ≤ 1.5.

2. The strengthened microcrystalline glass according to claim 1, wherein the compressive stress on the surface of the glass is represented as CS < 350 MPa.

3. The strengthened microcrystalline glass according to claim 1 or 2, wherein k1 is represented as 2.45 < |k1| < 4.35; and
optionally, k1 is represented as 2.60 < |k1| < 3.75.

4. The strengthened microcrystalline glass according to claim 1 or 2, wherein k2 is represented as 1.00 < |k2| < 1.35.

5. The strengthened microcrystalline glass according to any one of claims 1 to 4, wherein a depth of the compressive stress layer Dol_zero is represented as 110 µm - 142 µm; and when the depth is 50 µm, the stress CS_50 is 60 MPa - 130 MPa.

6. The strengthened microcrystalline glass according to any one of claims 1 to 5, wherein a composition (wt%) of the microcrystalline glass is: SiO₂ 58.1%-78.8%, Al₂O₃ 5.4%-24.1%, MgO+ZnO 0-15%, B₂O₃ 0-3.3%, P₂O₅ 0-1.9%, ZrO₂ 0-3.5%, Li₂O 1.6%-13.7%, Na₂O 1.6%-4.5%, K₂O ≤3.1%, Y₂O₃ ≤8%, and residuals are unavoidable impurities, wherein Na₂O/R.₂O ≤ 0.6, R₂O/Al₂O₃ ≤ 5.25, where R₂O is an alkali metal oxide.

7. The strengthened microcrystalline glass according to claim 6, a crystal phase of the microcrystalline glass comprises one or more of lithium disilicate, lithium petalite, β-quartz solid solution, and spinel, wherein crystallinity of the microcrystalline glass is 70% to 98%.

8. The strengthened microcrystalline glass according to claim 7, wherein the crystallinity of the microcrystalline glass is 80% to 95%.

9. The strengthened microcrystalline glass according to claim 7, wherein the crystallinity of the microcrystalline glass is 87% to 95%.

10. The strengthened microcrystalline glass according to any one of claims 1 to 9, wherein amount of warpage of the strengthened microcrystalline glass does not exceed 180 µm; optionally, the amount of warpage does not exceed 150 µm; and optionally, the amount of warpage does not exceed 120 µm.

11. A preparation method for the strengthened microcrystalline glass according to any one of claims 1 to 10, **characterized by** comprising steps of:
step 1: performing a crystallization treatment on a base glass, so as to obtain a basic microcrystalline glass; and
step 2: performing an ion exchange to the basic microcrystalline glass that has undergone the crystallization treatment.

12. The preparation method according to claim 11, wherein the ion exchange in step 2 comprises a two-time ion exchange, comprising:
a first-time ion exchange, comprising: immersing the basic microcrystalline glass into a first molten salt bath to perform the first-time ion exchange, wherein the first molten salt bath comprises at least 75 wt% of NaNO₃, a temperature of the first-time ion exchange is 430 to 450 Celsius degrees, and time duration is 6 to 11 hours; and
a second-time ion exchange, comprising: immersing the basic microcrystalline glass that has undergone the first-time ion exchange into a second molten salt bath to perform the second-time ion exchange, wherein the second molten salt bath at least comprises two molten salts of KNO₃ and LiNO₃, a temperature of the second-time ion exchange is 420 to 440 Celsius degrees, and a time duration is less than or equal to 60 minutes.

13. The preparation method according to claim 12, wherein a content of KNO₃ in the second molten salt bath is greater than or equal to 90wt%, and a content of LiNO₃ is represented as: 0<LiNO₃≤0.15wt%.

14. The preparation method according to any one of claims 11 to 13, wherein the crystallization treatment in step 1 comprises steps of: putting the base glass into a box-type crystallization furnace to perform a three-stage thermal treatment, wherein a first step is to raise the temperature to 520 to 580 Celsius degrees and keep the temperature for 200 to 300 minutes, a second step is to raise the temperature to 600 to 640 Celsius degrees and keep the temperature for 100 to 150 minutes, and a third step is to raise the temperature to 645 to 740 Celsius degrees and keep the temperature for 180 to 270 minutes; and then cooling down the base glass to obtain the basic microcrystalline glass.

15. An application of the strengthened microcrystalline glass according to any one of claims 1 to 10, **characterized in that** the strengthened microcrystalline glass is used as a cover plate for a mobile phone, a cover plate for a tablet computer, a cover plate for a watch, or a cover plate for a car display.
